# EUROPEAN PATENT APPLICATION

(11) **EP 4 675 612 A1**
(43) Date of publication of application: **07.01.2026**
(21) Application number: 25186365.0
(22) Date of filing: 30.06.2025
(51) Int. Cl.: G10L 13/027, G10L 25/30

(54) **REAL TIME MUSIC GENERATION FROM DIRECTED INPUT**

(30) Priority: 01.07.2024 US 202463666621 P; 26.06.2025 US 202519251380
(71) Applicant: Meta Platforms, Inc., Menlo Park, CA 94025 (US)
(72) Inventor: Woods, Philip, Menlo Park (US); Thabet, Ali, Menlo Park (US); Sanakoyeu, Artsiom, Menlo Park (US); Kant, David, Menlo Park (US)
(74) Representative: Murgitroyd & Company

(57) **Abstract**

Systems and methods to generate audio content are provided. The systems and methods include converting, at a communication device, user input to a text encoding. The systems and methods also include generating, by a first machine learning model associated with the communication device, at least one token representing acoustic information based on the text encoding. A first token of the at least one token may represent at least one audio feature. The systems and methods further include generating at least one audio vector based on the at least one token and the text encoding. The systems and methods further include transforming the at least one audio vector to an audio waveform including at least one segment of audio content associated with the at least one audio feature.

## Description

### TECHNICAL FIELD

The present disclosure relates generally to systems, methods, apparatuses, and computer program products for generating audio content, and in particular, generating musical content using machine learning models.

### BACKGROUND

Online users typically access and stream audio content, such as music, for entertainment and other creative purposes. Musical content may be accessed, for example, via steaming services or websites, but user choice is typically limited to the catalogues of music provided on such platforms. In many cases, it may also be challenging for users to easily find music that fits their particular mood or style in the moment. Although some users may have the skillset, instruments, and technology to compose their own musical content, doing so may often require specialty programs and significant time.

Generating original audio content may also present challenges, since digital audio content generation may require a complex combination of computer programs and processes to generate and synthesize original audio in a manner that is audibly pleasing to a listener, with unique musical tastes and interests. While some audio programs may assist with audio generation, many processes are slow and inefficient, thus requiring a significant amount of time (e.g., minutes to hours) just to generate a small portion of audio. Accordingly, improved techniques may be needed to address current drawbacks.

### SUMMARY

In meeting the described challenges, examples of the present disclosure may provide systems, methods, devices, and computer program products for generating audio content using directed input.

According to a first aspect, there is provided a method comprising: converting, by a communication device, user input to a text encoding; generating, by a first machine learning model associated with the communication device, at least one token representing acoustic information based on the text encoding, wherein a first token of the at least one token represents at least one audio feature; generating at least one audio vector based on the at least one token and the text encoding; and transforming the at least one audio vector to a first audio waveform comprising at least one segment of audio content associated with the at least one audio feature.

The first machine learning model may comprise an autoregressive transformer decoder.

The at least one audio vector may be generated by a second machine learning model associated with the communication device.

The method may further comprise: implementing, by the second machine learning model, flow matching.

The method may further comprise: transforming, by a decoder, the at least one audio vector to the first audio waveform.

The first audio waveform may correspond to a first window comprising a predetermined length associated with audio data.

The method may further comprise generating a second audio waveform corresponding to a second window. The second audio waveform may be generated based on the at least one token and a portion of the first audio waveform corresponding to the first window.

The method may further comprise: streaming, by the communication device, the first audio waveform and the second audio waveform to a second communication device.

The method may further comprise: receiving, by the communication device, streamed music content associated with the first window and the second window.

The user input may comprise a text input comprising a textual description of the audio content.

According to a second aspect, there is provided a system comprising: one or more processors; and one or more memories communicatively coupled to the one or more processors and comprising computer-readable instructions that upon execution by the one or more processors cause the one or more processors to carry out the method of the first aspect.

According to a third aspect, there is provided a computer-readable medium comprising computer-executable instructions which, when executed by a processor, cause the processor to carry out the method of the first aspect. The medium may be non-transitory.

According to a fourth aspect, there is provided a computer program product comprising instructions which, when executed by a computer, cause the computer to carry out the method of the first aspect.

Additional advantages will be set forth in part in the description which follows or may be learned by practice. The advantages may be realized and attained by means of the elements and combinations particularly pointed out in the appended claims. It is to be understood that both the foregoing general description and the following detailed description are exemplary and explanatory only and are not restrictive, as claimed.

### BRIEF DESCRIPTION OF THE DRAWINGS

The summary, as well as the following detailed description, is further understood when read in conjunction with the appended drawings. For the purpose of illustrating the disclosed subject matter, there are shown in the drawings examples of the present disclosure; however, the disclosed subject matter is not limited to the specific methods, compositions, and devices disclosed. In addition, the drawings are not necessarily drawn to scale. In the drawings:
FIG. 1A is a diagram of an exemplary network environment in accordance with n various example aspects discussed herein.
FIG. 1B illustrates an example model architecture, in accordance with various example aspects discussed herein.
FIG. 2 illustrates example data processing techniques, in accordance with various example aspects discussed herein.
FIG. 3 illustrates an example windowed generation process, in accordance with various example aspects discussed herein.
FIG. 4 illustrates a flowchart for generating an audio waveform, in accordance with various example aspects discussed herein.
FIG. 5 illustrates a flow chart for streaming generated content, in accordance with various example aspects discussed herein.
FIG. 6 illustrates a block diagram of an example device in accordance with various example aspects discussed herein.
FIG. 7 illustrates a block diagram of an example computing system in accordance with various example aspects discussed herein.
FIG. 8 illustrates a machine learning and training model in accordance with various example aspects discussed herein.
FIG. 9 illustrates a computing system in accordance with various example aspects discussed herein.

The figures depict various examples for purposes of illustration only. One skilled in the art will readily recognize from the following discussion that alternative examples of the structures and methods illustrated herein may be employed without departing from the principles described herein.

### DETAILED DESCRIPTION

The present disclosure may be understood more readily by reference to the following detailed description taken in connection with the accompanying figures and examples, which form a part of this disclosure. It is to be understood that this disclosure is not limited to the specific devices, methods, applications, conditions or parameters described and/or shown herein, and that the terminology used herein is for the purpose of describing particular arrangements by way of example only and is not intended to be limiting of the claimed subject matter.

Some examples of the present disclosure will now be described more fully hereinafter with reference to the accompanying drawings, in which some, but not all examples of the present disclosure are shown. Indeed, various examples of the present disclosure may be embodied in many different forms and should not be construed as limited to the examples set forth herein. Like reference numerals refer to like elements throughout. As used herein, the terms "data," "content," "information" and similar terms may be used interchangeably to refer to data capable of being transmitted, received and/or stored in accordance with examples of the invention. Moreover, the term "exemplary", as used herein, is not provided to convey any qualitative assessment, but instead merely to convey an illustration of an example. Thus, use of any such terms should not be taken to limit the scope of examples of the present disclosure.

As defined herein, a "computer-readable storage medium," which refers to a non-transitory, physical or tangible storage medium (e.g., volatile or non-volatile memory device), may be differentiated from a "computer-readable transmission medium," which refers to an electromagnetic signal.

As referred to herein, a Metaverse may denote an immersive virtual space or world in which devices may be utilized in a network in which there may, but need not, be one or more social connections among users in the network or with an environment in the virtual space or world. A Metaverse or Metaverse network may be associated with three-dimensional virtual worlds, online games (e.g., video games), one or more content items such as, for example, images, videos, non-fungible tokens (Fts) and in which the content items may, for example, be purchased with digital currencies (e.g., cryptocurrencies) and/or other suitable currencies. In some examples, a Metaverse or Metaverse network may enable the generation and provision of immersive virtual spaces in which remote users may socialize, collaborate, learn, shop, and engage in various other activities within the virtual spaces, including through the use of Augmented/Virtual/Mixed Reality.

As referred to herein, latent(s) may refer to any learned representation(s) of audio achieved using a machine learning model(s) and/or artificial intelligence.

As referred to herein, a text encoding(s) may denote a conversion of text input to one or more numbers, one or more vectors, a vector representation(s), or the like associated with the text input. A text encoding(s) may also represent semantic content of text in a numerically meaningful manner.

References in this description to "an example", "one example", or the like, may mean that the particular feature, function, or characteristic being described is included in at least one example of the present invention. Occurrences of such phrases in this specification do not necessarily all refer to the same example, nor are they necessarily mutually exclusive.

Also, as used in the specification including the appended claims, the singular forms "a," "an," and "the" include the plural, and reference to a particular numerical value includes at least that particular value, unless the context clearly dictates otherwise. The term "plurality", as used herein, means more than one. When a range of values is expressed, another example includes from the one particular value and/or to the other particular value. Similarly, when values are expressed as approximations, by use of the antecedent "about," it will be understood that the particular value forms another example. All ranges are inclusive and combinable. It is to be understood that the terminology used herein is for the purpose of describing particular aspects only and is not intended to be limiting.

It is to be appreciated that certain features of the disclosed subject matter which are, for clarity, described herein in the context of separate examples, may also be provided in combination in a single example. Conversely, various features of the disclosed subject matter that are, for brevity, described in the context of a single example, may also be provided separately or in any sub-combination. Further, any reference to values stated in ranges includes each and every value within that range. Any documents cited herein are incorporated herein by reference in their entireties for any and all purposes.

In various aspects, systems, methods, devices, or computer program products may provide interfaces to generate content. The techniques and aspects discussed herein differentiate and improve upon conventional systems, at least by generating advertisements and editable media, such as audio content, via an online interface based on attributes from at least one of a user profile. In examples, systems and methods may include an interface to enable user input, such as text, to be entered. The interface may then generate audio content based on the input.

Various aspects may include an automated interface, such as an interactive form or a bot, and one or more machine learning models to assist with content generation and operation. Such aspects may help eliminate guesswork and save significant time and resources for user devices and users, by generating content (e.g., audio content) in real-time. Machine learning models may assist with recommending and generating content via user input. Such interfaces and features may be incorporated on and/or accessible via a web page(s), application(s) or the like, for example. Generated content may be modifiable to enable further customization, and published via an online platform, such as, for example, a social media network, or other medium or platform.

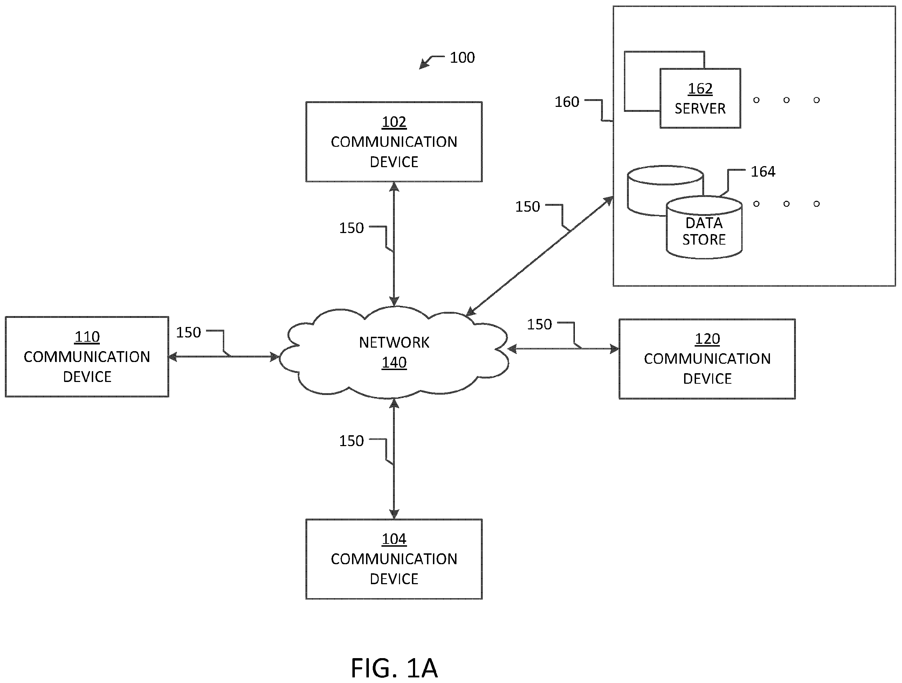

Reference is now made to FIG. 1A, which is a block diagram of a system. As shown in FIG. 1A, the system 100 may include one or more communication devices 102, 110, 104, and 120 and a network device 160. Additionally, the system 100 may include any suitable network such as, for example, network 140. In some examples, the network 140 may be a Metaverse network. In other examples, the network 140 may be any suitable network capable of provisioning content and/or facilitating communications among entities within, or associated with the network. As an example and not by way of limitation, one or more portions of network 140 may include an ad hoc network, an intranet, an extranet, a virtual private network (VPN), a local area network (LAN), a wireless LAN (WLAN), a wide area network (WAN), a wireless WAN (WAN), a metropolitan area network (MAN), a portion of the Internet, a portion of the Public Switched Telephone Network (PSTN), a cellular telephone network, or a combination of two or more of these. Network 140 may include one or more networks 140.

Links 150 may connect the communication devices 102, 110, 104, and 120 to network 140, network device 160 and/or to each other. This disclosure contemplates any suitable links 150. In some examples, one or more links 150 may include one or more wireline (such as for example Digital Subscriber Line (DSL) or Data Over Cable Service Interface Specification (DOKSAS)), wireless (such as, for example, Wi-Fi or Worldwide Interoperability for Microwave Access (WiMAX)), or optical (such as for example Synchronous Optical Network (SONET) or Synchronous Digital Hierarchy (SDH)) links. In some examples, one or more links 150 may each include an ad hoc network, an intranet, an extranet, a VPN, a LAN, a WLAN, a WAN, a WAN, a MAN, a portion of the Internet, a portion of the PSTN, a cellular technology-based network, a satellite communications technology-based network, another link 150, or a combination of two or more such links 150. Links 150 need not necessarily be the same throughout system 100. One or more first links 150 may differ in one or more respects from one or more second links 150.

In some examples, communication devices 102, 110, 104, 120 may be electronic devices including hardware, software, or embedded logic components or a combination of two or more such components and capable of carrying out the appropriate functionalities implemented or supported by the communication devices 102, 110, 104, 120. As an example, and not by way of limitation, the communication devices 102, 110, 104, 120 may be a computer system such as for example a desktop computer, notebook or laptop computer, netbook, a tablet computer (e.g., a smart tablet), e-book reader, Global Positioning System (GPS) device, camera, personal digital assistant (PDA), handheld electronic device, cellular telephone, smartphone, smart glasses, augmented/virtual reality device, smart watches, charging case, or any other suitable electronic device, or any suitable combination thereof. The communication devices 102, 110, 104, 120 may enable one or more users to access network 140. The communication devices 102, 110, 104, 120 may enable a user(s) to communicate with other users at other communication devices 102, 110, 104, 120.

Network device 160 may be accessed by the other components of system 100 either directly or via network 140. As an example and not by way of limitation, communication devices 102, 110, 104, 120 may access network device 160 using a web browser or a native application associated with network device 160 (e.g., a mobile social-networking application, a messaging application, another suitable application, or any combination thereof) either directly or via network 140. In particular examples, network device 160 may include one or more servers 162. Each server 162 may be a unitary server or a distributed server spanning multiple computers or multiple datacenters. Servers 162 may be of various types, such as, for example and without limitation, web server, news server, mail server, message server, advertising server, file server, application server, exchange server, database server, proxy server, another server suitable for performing functions or processes described herein, or any combination thereof. In particular examples, each server 162 may include hardware, software, or embedded logic components or a combination of two or more such components for carrying out the appropriate functionalities implemented and/or supported by server 162. In particular examples, network device 160 may include one or more data stores 164. Data stores 164 may be used to store various types of information. In particular examples, the information stored in data stores 164 may be organized according to specific data structures. In particular examples, each data store 164 may be a relational, columnar, correlation, or other suitable database. Although this disclosure describes or illustrates particular types of databases, this disclosure contemplates any suitable types of databases. Particular examples may provide interfaces that enable communication devices 102, 110, 104, 120 and/or another system (e.g., a third-party system) to manage, retrieve, modify, add, or delete, the information stored in data store 164.

Network device 160 may provide users of the system 100 the ability to communicate and interact with other users. In particular examples, network device 160 may provide users with the ability to take actions on various types of items or objects, supported by network device 160. In particular examples, network device 160 may be capable of linking a variety of entities. As an example and not by way of limitation, network device 160 may enable users to interact with each other as well as receive content from other systems (e.g., third-party systems) or other entities, or to allow users to interact with these entities through an application programming interfaces (API) or other communication channels.

It should be pointed out that although FIG. 1A shows one network device 160 and four communication devices 102, 110, 104, and 120, any suitable number of network devices 160 and communication devices 102, 110, 104, and 120 may be part of the system of FIG. 1A without departing from the scope of the present disclosure.

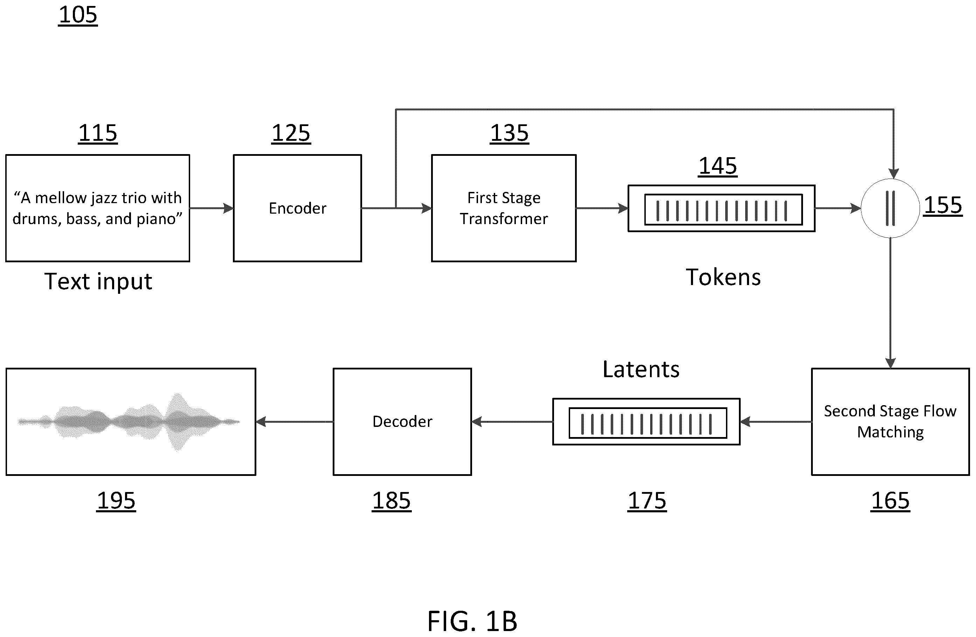

FIG. 1B illustrates an example model architecture for generating audio content, such as for example generating musical content. The architecture 105 may be a two-stage approach for directed music generation from/based on user input. The architecture 105 may output generated music that adheres to the user input. A first stage model may be applied to capture broad acoustic information, and a stage second model may capture finer grained audio detail. During training, by a machine learning model, both the first stage model and second stage model may be provided freeform text descriptions as input as well as a compressed audio representation(s) as training data. The first stage model and second stage model may also be trained on audio content.

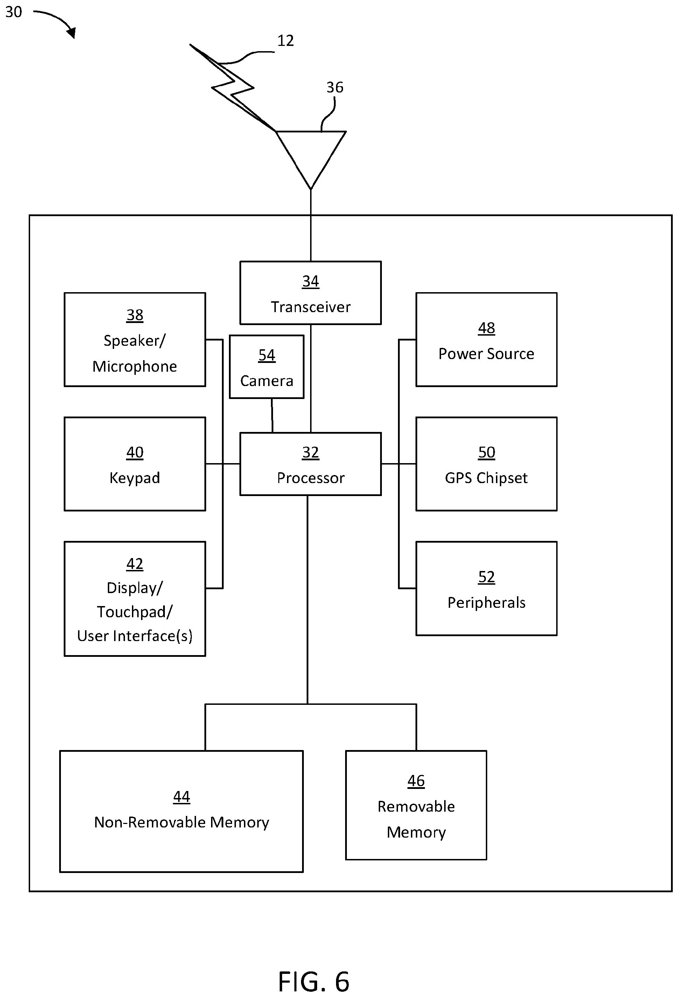

According to architecture 105 of FIG. 1B, user input may include directed input, e.g., text input 115 providing a textual description of the musical content to be generated. In some examples, the input text may be one or more spoken words by a user that may be captured by a communication device (e.g., UE 30 of FIG. 6) and converted to text via a speech-to-text device and may then be input to the architecture 105 as the text input 115. In some examples, the user input, e.g., text input 115, may be provided via a computing device (e.g., UE 30 of FIG. 6), such as a laptop, smartphone, tablet, portable computing device, and the like. The computing device may include a display or a graphical user interface providing a prompt to receive input, e.g., a text box, through which the user input (e.g., text input) may be provided. In the example of FIG. 1B, the text input 115 description may be, for purposes of illustration and not of limitation, "A mellow jazz trio with drums, bass, and piano." In another example, the input may be "chill hip hop beats" Or any other suitable user input (e.g., other text input). Additional examples may include "upbeat and cool, featuring driving electric guitar, bass, drums, and vocal chants that create a rebellious, feel-good mood," "fun and folksy, featuring bouncing piano, soaring wordless vocals and washy drums that create a lighthearted atmosphere," and "gentle and dreamy, featuring piano, electric guitar and smooth synth textures that creates a satisfied mood."

As described above, in other examples, the directed input may include audio, e.g., spoken words, text derived from audio input, and/or the like. The directed input may be audio generated by a user that is converted to text, for example, via a speech-to-text device. In addition, as described above any other suitable user input (e.g., other text input (e.g., other text inputs 115), audio input, etc.) may be provided.

The user input, including text input 115, may include a description of at least one music characteristic. The music characteristic may include, for example, at least one of a genre, a length, a mood, an artist, or an instrument.

The user input, e.g., text input 115, may be provided to an encoder 125, which may be, for example, a text encoder. The encoder 125 may receive user input and may convert the user input to an encoded representation. The encoded representation may, for example, be a sequence of dense vectors. In some examples, dense vectors may include an information-rich representation, and may be composed of decimal point (e.g., non-integer) values, which may be capable of capturing subtle relationships within data. The length of the dense vectors may depend, for example, on a length of the user input (e.g., input text). According to some example aspects of the present disclosure, a text encoder may be applied as the encoder 125.

Output from the encoder 125 may be provided to a First Stage Transformer 135. The First Stage Transformer 135 may use the text encoding output/generated by encoder 125 as input. The First Stage Transformer 135 may then output tokens 145 that may provide encoded representations. In such examples, the First Stage Transformer 135 may be a semantic learning model(s). The semantic learning model(s) may be a coarse semantic representation that captures broad acoustic information such as audio features., which may include one or more of rhythms, tempo, notes, etc. Such broad acoustic information may be represented by tokens 145.

In some examples, the First Stage Transformer 135 may provide tokens. The tokens 145 may correspond to one or more of audio frames, extracted features, hidden units, and/or the like. Such tokens 145 may be represented by integer values between 0 and 1024, for example, and may correspond to a length of audio. For example, 25 tokens may be provided per second of audio. In some examples, tokens may be generated using an autoregressive transformer decoder trained for a next token prediction task.

At node 155, output from the encoder 125 and tokens 145 may be collected and combined in one or more datasets. Node 155 may include one or more databases or storage units. Node 155 may serve to combine various data for fine tuning operations, as discussed herein.

A Second Stage Flow Matching model 165 (also referred to herein as model 165) may receive, as input, the text encoding, i.e., output from encoder 125, and tokens 145 output from the First Stage Transformer 135. The Second Stage Flow Matching Model 165 may provide an acoustic representation capturing finer grained audio detail such as the sound, e.g., timbre or spectra, of an instrument. The model 165 may be a generative model, applicable to audio generation and reconstruction of data through the learned flow. For example, the model 165 may be a transformer-based model that may predict continuous features by iteratively denoising an initial result. The model 165 may therefore apply flow matching to generate at least one audio vector.

In some examples, the output of the Second Stage Flow Matching model 165 may be provided as latent 175, which may be represented as a sequence of dense vectors. Latents 175 may provide an intermediate representation, e.g., hidden state, to capture an underlying structure and information of the input data (e.g., output from encoder 125 and tokens 145). In an example, vectors (e.g., dense vectors) may consist of 128 floating point values. In another example, 75 vectors may be provided per second of audio content.

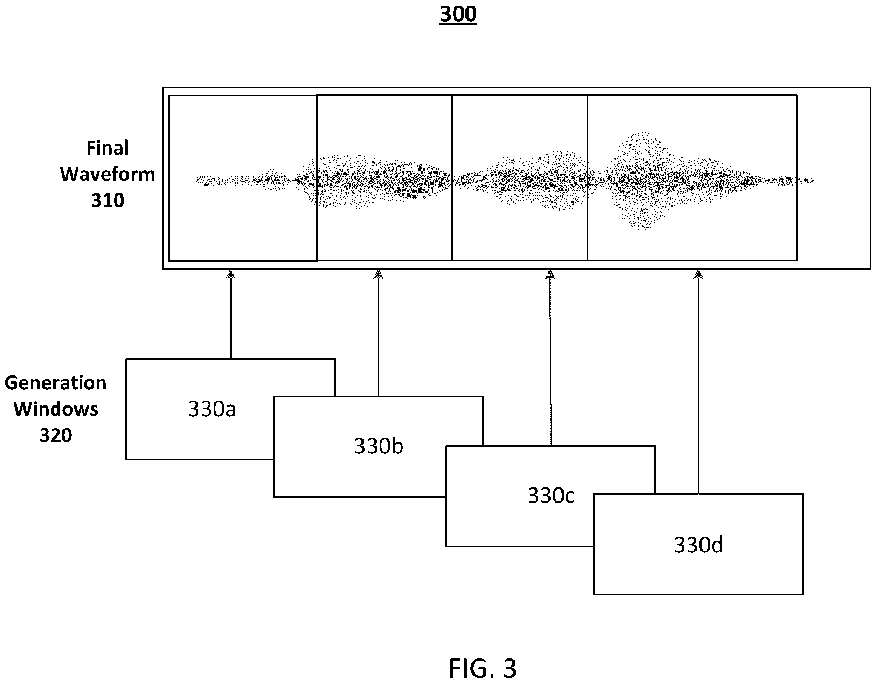

A decoder 185 may receive latents 175 and may decode the latents 175 to audio waveforms 195. In some examples, an EnCodec model may be applied by the decoder 185. The generated audio waveforms may be downloaded, saved, streamed, and the like (e.g., by a computing device). In some examples, the audio waveform may be a complete song and/or a final musical content item. In other examples, such as in the streamlining model described herein, the generated audio may represent a portion, e.g., 1-6 seconds of the final music content item. In the streaming model architecture (see, e.g., FIG. 3), music may be generated and streamed in real-time, such as within one second of receiving the user input. In various examples, the music stream may continue to be generated and output for a desired length of time.

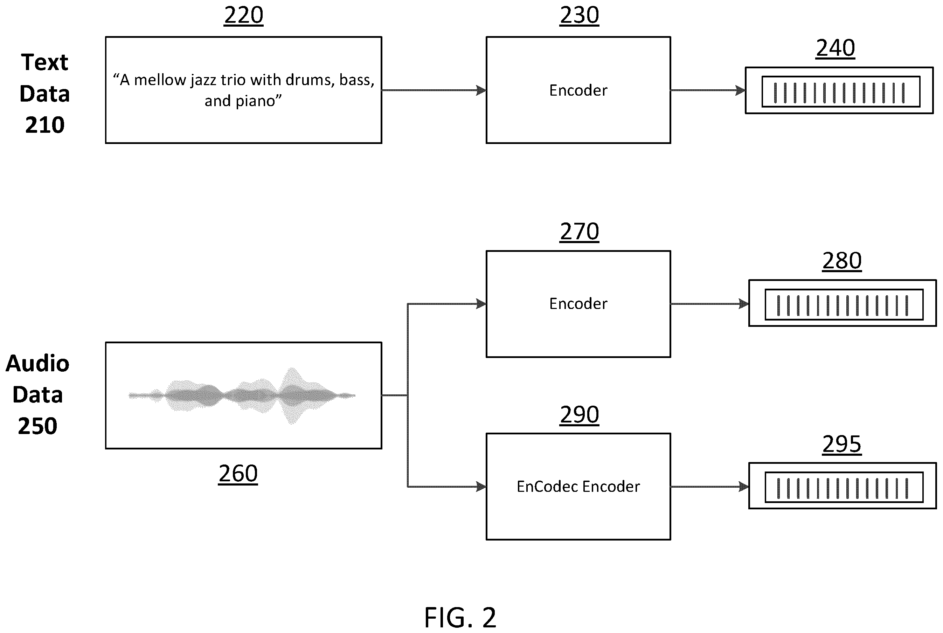

FIG. 2 illustrates example data processing techniques for a text data process 210 and an audio data process 250 in accordance with aspects discussed herein. A text data process 210 and an audio data process 250 may enable one or more encoders to develop representations, e.g., tokens and latents, to generate audio waveforms corresponding to musical content.

In the text data process 210, text data 220 may provide a textual description of one or more music characteristics to be incorporated into generated audio content. Text data 220 may correspond to user input (e.g., text input 115) and may describe one or more of a music genre, length, mood, artist, or instrument. Genres, for example, may include, for example, jazz, pop, hip hop, electronic, rock, metal, indie, alternative, blues, instrumental music and any other suitable genres or categories of music. A music length may refer to a time length of the musical content, e.g., 1-4 minutes, or longer or shorter. A mood may include, for example, descriptors such as happy, sad, calm, energetic, angry, excited, anxious, and/or the like. Artists may refer to a musical artist, musician, group, etc., and instrument may refer to any musical instrument(s).

An input device such as for example a user interface of a computing device capturing input of the text data 230 may provide the text data 230 to an encoder 230, such as for example a text encoder (e.g., a text-based encoder), which may analyze one or more attributes of the text data 220 and may generate text features 240. In some examples, the encoder 230 may be pre-trained based on text sequences comprising diverse data sets. Such training may enable the encoder 230 to identify words, sequences, relationships and/or contextual representations relating to the received textual input. In some examples, the encoder 230 may be trained, by a computing device (e.g., UE 30 of FIG. 6), on prior music descriptions or audio content descriptions, which may, for example, be human-generated and/or computer-generated. The generated textual features 240 may be applied to generate broad acoustic information and/or finer grained audio detail as described herein.

In the audio data process 250, an audio waveform 260 may also be analyzed and processed to generate tokens and latents usable to generate waveforms. In some examples, audio data 260 may be used, as training data, to train one or more encoders on existing audio content and musical data.

In an example, audio waveform 260 may be analyzed by a first encoder 270 and a second encoder 290. In some examples, the first encoder 270 may be a learning self-supervised speech representation encoder and the second encoder 290 may be an EnCodec encoder. In some examples, the first encoder 270 may be a self-supervised masked-language model. Learned self-supervised speech representation encodings may be discretized via k-means clustering, or other tokenization methods such as lookup-free quantization (LFQ). In some examples, an EnCodec may be a convolutional encoder-decoder architecture trained to learn a discrete representation of audio. The encoder 270 may generate tokens 280 (e.g., learned self-supervised speech representation tokens) and the encoder 290 may generate EnCodec latents 295.

The first encoder 270, may generate the coarse semantic representation to capture broad acoustic information, such as, for example, rhythm and/or notes from the audio waveform 260. Other broad acoustic information may include beat, rhythm, tempo, meter, melody, and/or harmony.

The second encoder 290, e.g., EnCodec encoder, may generate finer grained audio detail, such as sound characteristics, e.g., timbre and/or spectra. Timbre may refer to a color or quality of sound, and sound distinctions between similar pitch and loudness (e.g., violin vs. piano). Spectra may refer to the distribution of frequencies within an audio waveform. For example, the energy and amplitude of various frequencies. Some examples may be white noise, complex tones, and/or pure tones. Other sound characteristics may include pitch, loudness, duration, attack, and/or decay. In various examples, the output from the text data process 210 and audio data process 250 may be used to re-train one or more encoders and/or machine learning models described (e.g., machine learning model 810) herein.

FIG. 3 illustrates an example windowed generation process 300, which may be applicable in streaming architectures. In order to generate audio and provide fast, real-time, music generation, a streaming windowed generation process may be applied. In some examples, rather than generate an entire song or audio content at once, for e.g., using the processes discussed in FIG. 1B and FIG. 2, smaller chunks, e.g., windows, may be generated and streamed, in succession, to a computing device (e.g., UE 30) associated with a user. The window generation approach may therefore retain some amount of the previous generation window (e.g., part of the audio waveform). At each noise prediction, rather than predict the signal trajectory, the signal from the previous window(s) may be provided. As such, the new window predictions may remain consistent with the audio at each intermediate prediction step.

In an example, in an instance in which user input, e.g., text input, is received, a first window 330a may be generated and returned to a user, e.g., receiving, by the communication device, streamed music content associated with the first window 330a and the second window 330b. While the first window 330a is being served to the user, a computing device may generate a second window 330b, and may stream the second window 330b to the user immediately following the first window 330a. This process may continue via windows 330c, 330d, and may be streamed to a user in sequence, for as long as desired (e.g., by the user). In some examples, each window may represent a predetermined length associated with audio data or music data. The predetermined length may be a predetermined length of audio (e.g., 6 seconds, 7 seconds, etc.). The predetermined length may be adjusted, as desired.

As a result, the generation windows 320 may correspond to a final waveform 310 representing the musical content, e.g., a song. The generation windows 320 may be streamed to a user computing device (e.g., UE 30), in sequence, such that the user or listener hears a cohesive stream of audio corresponding to the final waveform.

In the windowed generation process 300, a two-stage process may be applied similarly to those discussed in FIG. 1B and FIG. 2. In a first stage, an autoregressive transformer decoder (e.g., a large language model (LLM) or a Generative Pre-Trained Transformer (GPT)) may be applied to generate a coarse broad acoustic representation, and the second stage may fine-tune the audio content with more particular characteristics. A portion of each window may be applied as input to generate a subsequent window. For example, a portion of first window 330a may be used to generate second window 330b. For purposes of illustration and not of limitation, in an instance in which first window 330a has a length of 6 seconds, the last 3 seconds may overlap with the first 3 seconds of second window 330b, the last 3 seconds of second window 330b may overlap with the first 3 seconds of third window 330c, and the last 3 seconds of third window 330c may overlap with the first 3 seconds of fourth window 330d. This may provide consistency and cohesiveness between audio associated with each window, such that in an instance in which the windows are sequentially streamed to a user computing device, there may be no audible gap or inconsistency.

The window size may be chosen based on a trade-off between quality and speed. For example, the longer the window the better the quality, but the slower the generation latency. In some examples, window lengths may be predetermined seconds with predetermined second overlaps (e.g., 12 seconds with 6 second overlaps). In other examples, the window lengths may be other predetermined seconds with other predetermined overlaps (e.g., 6 seconds with 3 second overlaps).

In the first stage, an autoregressive model may be optimized using, for example, a streaming cache. Using a streaming cache may help to avoid re-computing past tokens thereby providing consistency and speed with generation of a next window. In some examples, to maintain long-term consistency, the first stage model may be trained on a long variable length context, e.g., corresponding to entire songs or long sections of songs or other music content, due to the autoregressive causal train mask.

In the second stage, a flow matching model may be applied to generate finer-tuned audio characteristics. The flow matching model may be designed to predict music (e.g., songs, other music content) from an initial noise signal, and predict music signal trajectories at each prediction step. In some examples, the flow matching model may require a global context and may be trained for an outpainting task. Outpaining may refer to the process of generating additional data points, e.g., novel data points, extending beyond the context of original data. For example, outpainting may include sampling from a learned latent space, e.g., latents 175, to generate new, contextually consistent data points. In some examples, outpainting may be implemented using non-noise latents, e.g., from latents 175, for prompt audio and/or masking. The flow matching model may also be trained on variable lengths (e.g., 4-18 seconds) to optimize the flow matching model for the windowed generation process 300.

An audio prompting strategy may also be applied to provide a "step prediction" to improve stability of the flow matching model and windowed generation process. In an example, at each window, intermediate Ordinary Differential Equation (ODE) solver predictions from previous prompt windows may be applied to stabilize audio generation. The predictions may be combined, for example, with spectrogram masking to maintain audio continuation quality. Latents may then be dynamically rescaled to ensure that the distribution may not drift from the trained distribution associated with the flow matching model.

Such techniques may be applied online, for example, as part of a streaming artificial intelligence (AI) audio service (e.g., streaming Al radio service). The low-latency, streaming capability of various aspects described herein may enable endlessly streaming generated music content to a user, much like a radio. As such, music may be generated to fit a particular user's interests via directed input (e.g., text input). The music may be Al generated, which may be generated anew and may not prior exist before such music generation. Users may therefore dynamically change music, in real time, as the user changes the directed input, much like changing the station associated with a radio.

According to another example, the low-latency, streaming model may be integrated into an Al agent, thus giving the Al agent (e.g., an Al bot) the ability to generate music for a user and dynamically modify the music in response to the user's suggestion.

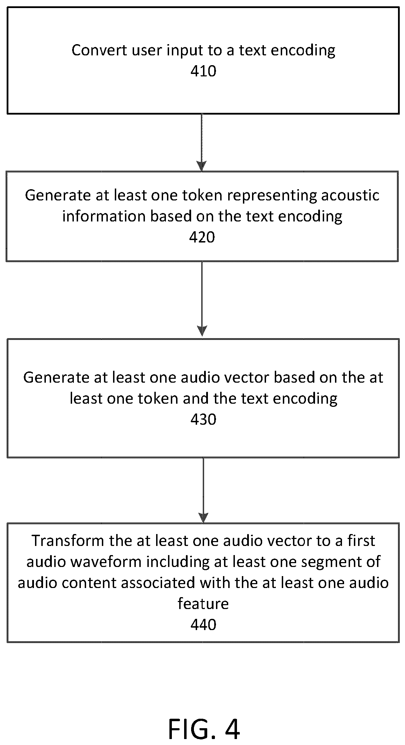

FIG. 4 illustrates a flow chart to generate audio content in accordance with various aspects discussed herein. At block 410, a computing device (e.g., UE 30) may convert user input received to a text encoding (e.g., text features 240). The user input may be received at the computing device. Such user input may include, e.g., text input 115 and text data 220. The user input may include text input corresponding to a description of at least one music characteristic. The music characteristic may include at least one of a genre, a length, a mood, an artist, or an instrument.

At block 420, a computing device (e.g., UE 30) may generate at least one token (e.g., tokens 145) representing acoustic information based on the text encoding (e.g., text features 240). A first machine learning model (e.g., First Stage Transformer 135, encoder 270, etc.) may be applied to generate the at least one token (e.g., tokens 145). The first machine learning model may include an autoregressive transformer decoder. In some examples, the first machine learning model may be, or associated with, machine learning model 810. A first token of the at least one token may represent at least one audio feature.

At block 430, a computing device (e.g., UE 30) may generate at least one audio vector (e.g., latents 175) based on the at least one token (e.g., tokens 145) and the text encoding (e.g., text features 240). A second machine learning model (e.g., Second Stage Flow Matching model 165, encoder 290 (e.g., an EnCodec encoder), etc.) may be applied to generate the at least one audio vector (e.g., latents 175). The second machine learning model may apply flow matching. In some examples, the second machine learning model may be, or associated with, machine learning model 810.

According to various examples, a computing device (e.g., UE 30) may train at least one of the first machine learning model and/or the second machine learning model with an audio waveform (e.g., audio waveform 195).

At block 440, a computing device (e.g., UE 30) may transform at least one audio vector (e.g., latents 175) to a first audio waveform (e.g., audio waveform 195) including at least one segment of audio content associated with the at least one audio feature. In examples, aspects may apply a decoder (e.g., decoder 185) to transform the at least one audio vector (e.g., latents 175) to the first audio waveform (e.g., audio waveform 195). The first audio waveform may correspond to a window (e.g., windows 330a, 330b, 330c, and 330d) comprising a set/predetermined length (e.g., 6 seconds).

Operations of blocks 410-440 may occur separately, independently, and/or concurrently with the operations at blocks 410-440. By implementing operations of the blocks 410-440, music may be Al generated, by a computing device, based on the user input (e.g., text input 115) and the music may be generated anew and may not prior exist before such music generation by the Al (e.g., an Al agent, an Al bot, etc.). According to various examples, directed input, such as text input 115 in FIG. 1B may be received by a communication device (e.g., UE 30), which may perform one or more operations of blocks 410-440. In examples, the generated audio content may be new music, that may not previously exist, in the same rhythm, genre, or other categories described in the directed input. For example, given the text input 115 of FIG. 1B, describing "A mellow jazz trio with drums, bass, and piano," a communication device (e.g., UE 30) may generate a new, original audio content (e.g., music (e.g., mellow jazz music)) associated with the elements (e.g., mellow jazz) described in text input 115, and which may not be previously in existence in the described category or categories of the text input 115 (e.g., mellow jazz). According to examples, the Al generated music may have a predetermined length (e.g., 3 seconds, 6, seconds, 12 seconds, etc.). In other examples, the directed input may define the predetermined length (e.g., specifying a 3-minute song, etc.)

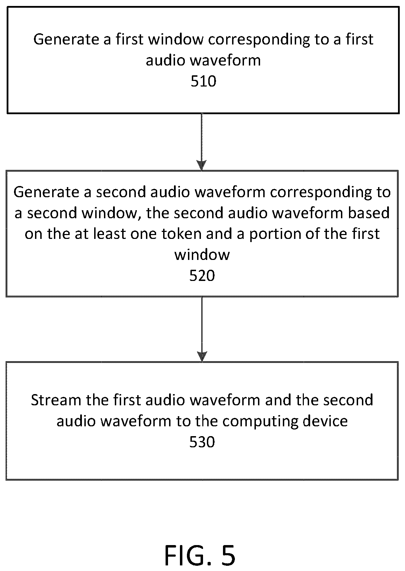

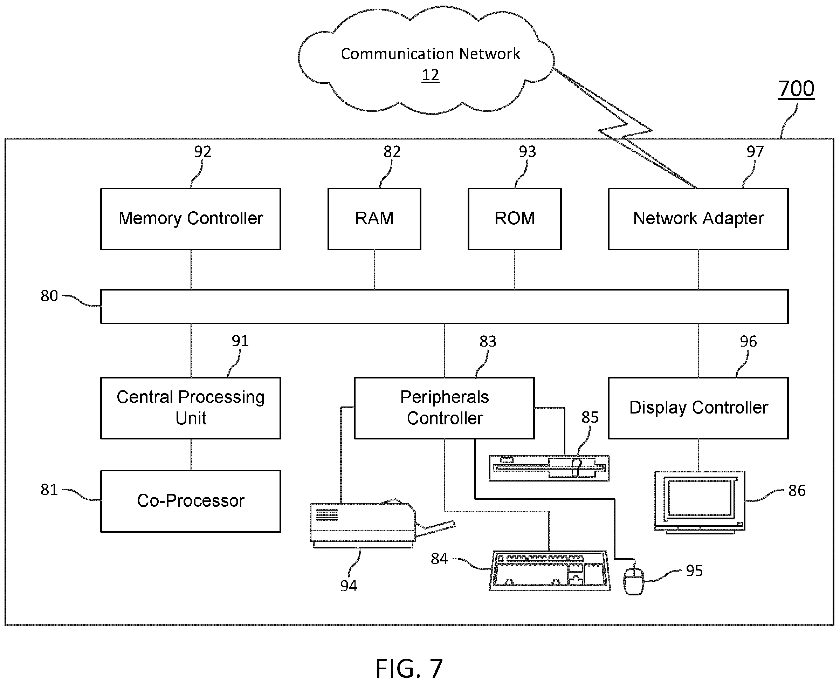

FIG. 5 illustrates a flow chart to stream generated content, in accordance with aspects discussed herein. At block 510, a communication device (e.g., computing system 700 of FIG. 7) may generate a first window (e.g., first window 330a) corresponding to a first audio waveform (e.g., a first section of final waveform 310). In some examples, a server and a client may work together to perform audio content generation such as for example streaming. For example, a client, e.g., UE 30 or communication device 110, may repeatedly request a next audio window (e.g., window 330b) from a network device, e.g., computing system 700. The request may be made, for example, according to a predetermined time period/schedule (e.g., every 6 seconds). The client may send a previously generated window (e.g., block 330a) as a prompt to the network device, and the network device may send back the next audio window to the client.

At block 520, a communication device (e.g., computing system 700) may generate a second audio waveform corresponding to a second window (e.g., second window 330b). The second audio waveform (e.g., a second section of final waveform 310) may be based on the at least one token (e.g., tokens 145) and a portion of the first window (e.g., first window 330a).

At block 530, a communication device (e.g., computing system 700) may stream the first audio waveform and the second audio waveform to a computing device (e.g., UE 30). Additional processes similar to block 530 may continue via windows 330c, 330d, and may be streamed to a computing device of a user in sequence, for as long as desired (e.g., as long as desired by the user). Additionally, or alternatively, the first audio waveform and the second audio waveform may be output from the communication device. In some examples, the audio content may continue streaming so long as the application, browser, window, or interface (e.g., I/O interface 908) in which the streaming service is operating is open/active. In an instance in which the interface is closed or stopped, the music may stop being streamed. In other examples, the interface may have a "stop" or "pause" button that may halt the streaming of music. In examples, each window may represent a set/predetermined length of audio (e.g., 6 seconds, 7 seconds, etc.). The predetermined length may also be adjusted, as desired. For example, directed input may define the predetermined length (e.g., specifying a 3-minute song, etc.)

Operations of blocks 510-530 may occur separately, independently, and/or concurrently with the operations at blocks 510-530. By implementing operations of the blocks 510-530, music may be Al generated and streamed based on the user input (e.g., text input 115) and the streamed Al music may be generated anew and may not prior exist before such music generation by the Al (e.g., an Al agent, an Al bot, etc.).As described above, the windows (e.g., windows 330a, 330b, 330c, 330d) associated with the streamed Al generated music may have a predetermined length (e.g., 5, seconds, 6, seconds, 7 seconds, etc.). The windows may be continuously streamed to a computing device of a user in sequence, for as long as desired by a user. In some examples, a communication device (e.g., UE 30) of a user may receive one or more new windows representing n-seconds (e.g., 3 seconds, 6 seconds, 9 seconds, 12 seconds, etc.), in which each subsequent window may represent the next n-seconds of audio content. The n-seconds may be determined by a window length (e.g., 3 second interval window length, 6 second interval window length, 12 second interval window length, etc.)

According to various examples, similar to the operations of FIG. **4****,** directed input, such as text input 115 in FIG. 1B may be received by a computing system, e.g., computing system 700, which may perform one or more operations of blocks 510-530, and may stream audio content (e.g., music, songs, audio content, etc.), e.g., in real time, to one or more communication devices (e.g., UE 30). In some examples, the generated, streaming audio content may be new music that may not be previously in existence in the same rhythm, genre, or other category described in the directed input (e.g., text input 115). For example, given the text input 115 of FIG. 1B, describing "A mellow jazz trio with drums, bass, and piano," a computing system (e.g., computing system 700) may generate a new, original audio content (e.g., music (e.g., new stream of mellow jazz music)) to be streamed to a user device (e.g., UE 30). The streamed, original audio content may be associated with the elements (e.g., text) described in text input 115 and may not be previously in existence in the described category or categories of the directed input (e.g., mellow jazz).

FIG. 6 illustrates a block diagram of an exemplary hardware/software architecture of a communication device such as, for example, user equipment (UE) 30. In some exemplary aspects, the UE 30 may be any of communication devices 102, 110, 104, 120. In some exemplary aspects, the UE 30 may be a computer system such as, for example, a desktop computer, notebook or laptop computer, netbook, a tablet computer (e.g., a smart tablet), e-book reader, GPS device, camera, personal digital assistant, handheld electronic device, cellular telephone, smartphone, smart glasses, augmented/virtual reality device, smart watch, charging case, or any other suitable electronic device. As shown in FIG. 6, the UE 30 (also referred to herein as node 30) may include a processor 32, non-removable memory **44,** removable memory 46, a speaker/microphone 38, a keypad 40, a display, touchpad, and/or user interface(s) 42, a power source 48, a global positioning system (GPS) chipset 50, and other peripherals 52. In some exemplary aspects, the display, touchpad, and/or user interface(s) 42 may be referred to herein as display/touchpad/user interface(s) 42. The display/touchpad/user interface(s) 42 may include a user interface capable of presenting one or more content items and/or capturing input of one or more user interactions/actions associated with the user interface. The power source 48 may be capable of receiving electric power for supplying electric power to the UE 30. For example, the power source 48 may include an alternating current to direct current (AC-to-DC) converter allowing the power source 48 to be connected/plugged to an AC electrical receptable and/or Universal Serial Bus (USB) port for receiving electric power. The UE 30 may also include a camera 54. In an example, the camera 54 may be a smart camera configured to sense images/video appearing within one or more bounding boxes. The UE 30 may also include communication circuitry, such as a transceiver 34 and a transmit/receive element 36. It will be appreciated the UE 30 may include any sub-combination of the foregoing elements while remaining consistent with an example.

The processor 32 may be a special purpose processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. In general, the processor 32 may execute computer-executable instructions stored in the memory (e.g., non-removable memory 44 and/or removable memory 46) of the node 30 in order to perform the various required functions of the node. For example, the processor 32 may perform signal coding, data processing, power control, input/output processing, and/or any other functionality that enables the node 30 to operate in a wireless or wired environment. The processor 32 may run application-layer programs (e.g., browsers) and/or radio access-layer (RAN) programs and/or other communications programs. The processor 32 may also perform security operations such as authentication, security key agreement, and/or cryptographic operations, such as at the access-layer and/or application layer for example.

The processor 32 is coupled to its communication circuitry (e.g., transceiver 34 and transmit/receive element 36). The processor 32, through the execution of computer executable instructions, may control the communication circuitry in order to cause the node 30 to communicate with other nodes via the network to which it is connected.

The transmit/receive element 36 may be configured to transmit signals to, or receive signals from, other nodes or networking equipment. For example, in an example, the transmit/receive element 36 may be an antenna configured to transmit and/or receive radio frequency (RF) signals. The transmit/receive element 36 may support various networks and air interfaces, such as wireless local area network (WLAN), wireless personal area network (WPAN), cellular, and the like. In yet another example, the transmit/receive element 36 may be configured to transmit and/or receive both RF and light signals. It will be appreciated that the transmit/receive element 36 may be configured to transmit and/or receive any combination of wireless or wired signals.

The transceiver 34 may be configured to modulate the signals that are to be transmitted by the transmit/receive element 36 and to demodulate the signals that are received by the transmit/receive element 36. As noted above, the node 30 may have multi-mode capabilities. Thus, the transceiver 34 may include multiple transceivers for enabling the node 30 to communicate via multiple radio access technologies (RATs), such as universal terrestrial radio access (UTRA) and Institute of Electrical and Electronics Engineers (IEEE 802.11), for example.

The processor 32 may access information from, and store data in, any type of suitable memory, such as the non-removable memory 44 and/or the removable memory 46. For example, the processor 32 may store session context in its memory, (e.g., non-removable memory 44 and/or removable memory 46) as described above. The non-removable memory 44 may include RAM, ROM, a hard disk, or any other type of memory storage device. The removable memory 46 may include a subscriber identity module (SIM) card, a memory stick, a secure digital (SD) memory card, and the like. In other examples, the processor 32 may access information from, and store data in, memory that is not physically located on the node 30, such as on a server or a home computer.

The processor 32 may receive power from the power source 48, and may be configured to distribute and/or control the power to the other components in the node 30. The power source 48 may be any suitable device for powering the node 30. For example, the power source 48 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like. The processor 32 may also be coupled to the GPS chipset 50, which may be configured to provide location information (e.g., longitude and latitude) regarding the current location of the node 30. It will be appreciated that the node 30 may acquire location information by way of any suitable location-determination method while remaining consistent with an example.

FIG. 7 is a block diagram of an exemplary computing system 700. In some examples, the network device 160 may be a computing system 700. The computing system 700 may comprise a computer or server and may be controlled primarily by computer readable instructions, which may be in the form of software, wherever, or by whatever means such software is stored or accessed. Such computer readable instructions may be executed within a processor, such as central processing unit (CPU) 91, to cause computing system 700 to operate. In many workstations, servers, and personal computers, central processing unit 91 may be implemented by a single-chip CPU called a microprocessor. In other machines, the central processing unit 91 may comprise multiple processors. Coprocessor 81 may be an optional processor, distinct from main CPU 91, that performs additional functions or assists CPU 91.

In operation, CPU 91 fetches, decodes, and executes instructions, and transfers information to and from other resources via the computer's main data-transfer path, system bus 80. Such a system bus connects the components in computing system 700 and defines the medium for data exchange. System bus 80 typically includes data lines for sending data, address lines for sending addresses, and control lines for sending interrupts and for operating the system bus. An example of such a system bus 80 is the Peripheral Component Interconnect (PCI) bus.

Memories coupled to system bus 80 include RAM 82 and ROM 93. Such memories may include circuitry that allows information to be stored and retrieved. ROMs 93 generally contain stored data that cannot easily be modified. Data stored in RAM 82 may be read or changed by CPU 91 or other hardware devices. Access to RAM 82 and/or ROM 93 may be controlled by memory controller 92. Memory controller 92 may provide an address translation function that translates virtual addresses into physical addresses as instructions are executed. Memory controller 92 may also provide a memory protection function that isolates processes within the system and isolates system processes from user processes. Thus, a program running in a first mode may access only memory mapped by its own process virtual address space; it cannot access memory within another process's virtual address space unless memory sharing between the processes has been set up.

In addition, computing system 700 may contain peripherals controller 83 responsible for communicating instructions from CPU 91 to peripherals, such as printer 94, keyboard 84, mouse 95, and disk drive 85.

Display 86, which is controlled by display controller 96, may be used to display visual output generated by computing system 700. Such visual output may include text, graphics, animated graphics, and video. The display 86 may also include, or be associated with a user interface. The user interface may be capable of presenting one or more content items and/or capturing input of one or more user interactions associated with the user interface. Display 86 may be implemented with a cathode-ray tube (CRT)-based video display, a liquid-crystal display (LCD)-based flat-panel display, gas plasma-based flat-panel display, or a touch-panel. Display controller 96 includes electronic components required to generate a video signal that is sent to display 86.

Further, computing system 700 may contain communication circuitry, such as for example a network adaptor 97, that may be used to connect computing system 700 to an external communications network, such as network 12 of FIG. 6, to enable the computing system 700 to communicate with other nodes (e.g., UE 30) of the network.

Some examples of the present disclosure may provide approaches and techniques to facilitate efficient and reliable mechanisms that provide real time generation of audio content from directed input (e.g., text input 115) including different types of audio, e.g., music content. In some example aspects of the present disclosure, the generated audio content may be determined based, in part, on historical user interactions, historical text input, and/or directed input associated with one or more corresponding users, as described more fully below.

Some examples of the present disclosure may enable a communication device (e.g., UE 30, computing system 700) to implement a machine learning model (e.g., machine learning model(s) 810), which may determine data (e.g., tokens 145 or latents 175) associated with directed input (e.g., text input 115) received from a user(s) or set/group of users via a text box, interactive interface, or user interface (e.g., associated with an app), which may be provided online, by a website, via an application (app), and/or the like. Furthermore, for a same or similar set of directed input or text input(s), the communication device which may implement/execute the machine learning model may generate a different summary of the same/similar resource(s) based, in part, on determining a different set of contextual data associated with, for example, different attributes, a different user and/or a different set/group of users.

The communication device may present (e.g., via a display/touchpad/user interface(s) 42 and/or a display 86) an interactive input form in which the directed input may be provided or uploaded (e.g., within or associated with an app).

In some aspects of the present disclosure, the machine learning model(s) (e.g., machine learning model(s) 810) may utilize one or more inputs such as, for example, an impression(s) or determination(s) about the content of a resource itself and/or contextual data associated with a user(s) (also referred to herein as user contextual data). For purposes of illustration and not of limitation, as an example of the determination(s) about the content of a directed input, consider an example in which the directed input may be received via a text form on a web page. In this regard, the machine learning model(s) may utilize as an input(s) details/attributes previously received at the text form or the web page itself in part to determine a summary (e.g., audio summary) associated with the directed input (e.g., the text input 115). The attributes of the received content may include, but are not limited to, a title, contents (e.g., a summary of the directed input), relevant subjects, and other details that the machine learning model may determine based on analyzing the directed input itself.

Regarding the data associated with a user(s) being utilized by the machine learning model(s) as an input(s), the machine learning model(s) may analyze historical data associated with a user such as, for example, one or more interactions of a user (e.g., within, or associated with, an app) and previously receive directed input over/during a predetermined time period to determine user specific data. As examples, the predetermined time period may be one or more weeks, a month(s), or any other suitable predefined time period(s). Additionally, in some examples the predetermined time period may span a time period from a prior instance of time up to a current real-time. Some examples of historical data associated with one or more interactions of a user (e.g., user historical interactions) may include, but need not be, determining the interactions associated with prior/current posts of the user, the subject matter/topic of prior/current content read by the user, prior/current likes of the user (e.g., associated with an app). In some aspects of the present disclosure, the users associated with a network or system (e.g., network 140, system 100) may opt in with the network or the system to allow the computing system 700 and/or the UE 30 to determine the user historical interactions.

For purpose of illustration and not of limitation, as an example, the machine learning model(s) may analyze the user interaction historical data associated with a user and may determine that the user previously listened to, liked, or entered input about a particular genre of music (e.g., requested "classical music" during the predetermined time period). In this regard, for example, the machine learning model(s) may determine that the user has an affinity toward such genres (e.g., classical music) and may use such information to tailor the generated audio. As such, the machine learning model(s) may learn the focuses and/or interests of a user based in part on analyzing the user interaction historical data. The machine learning model(s) may utilize this data in part to generate a summary of a resource(s) by determining the generated summary based on the focuses, and/or interests the user.

As such, because the directed input (e.g., text input 115) may differ among different users, even for a same/similar audio request(s), the machine learning model(s) may generate different types of audio content and musical content. In this manner, the machine learning model(s) may generate personalized, and/or user-specific tailored audio content.

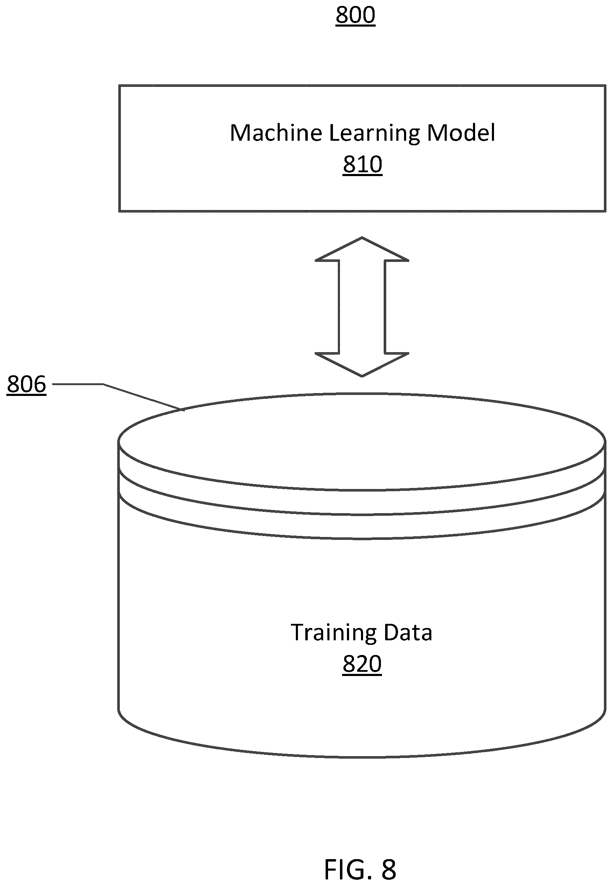

FIG. 8 illustrates a framework 800 according to example aspects of the present disclosure. In some examples, the framework 800 may be configured to be implementable by a software application (e.g., computer code, a computer program) and/or hardware to generate audio content, including but not limited to one or more of audio waveforms, musical content or the like, in accordance with example aspects discussed herein. The framework 800 may be hosted remotely. Alternatively, the framework 800 may reside within a computing/communication device (e.g., UE 30 shown in FIG. 6) and/or may be processed by a computing system (e.g., computing system 700, computing system 900). The machine learning model 810 may be operably coupled to the database 806 storing the training data 820.

In an example, the training data 820 may include attributes of thousands of objects. For example, the object(s) may be identified and/or associated with audio representations, such as semantic representations and/or acoustic representations, textual descriptions, and/or the like. According to some examples, annotations may be provided as training data. The annotations may be data selected to cover/address a diversity of musical genres and/or musical styles. Attributes may include but are not limited to music characteristics such as one or more of genre, length, mood, artist, instrument, tempo, style, rhythm, meter, etc. Additional examples may include freeform text descriptors, which may describe a content of music and/or a context in which a user(s) may hear music or may desire to listen to music. Some non-limiting examples may include, but are not limited to, "at a party," "in a television commercial," "at the beach," etc. The training data 820 used to train the machine learning model 810 may be fixed and/or updated periodically. Alternatively, the training data 820 may be updated in real-time based upon the evaluations performed by the machine learning model 810 in a non-training mode. This is illustrated by the double-sided arrow connecting the machine learning model 810 and stored training data 820.

In operation, the machine learning model 810 may evaluate attributes of advertisements, images, videos, audio, music, songs, jingles, and/or other media obtained by hardware (e.g., UE 30, etc.). For example, aspects of a user profile, posts, advertisements, pictures, images, audio, web pages and the like may be ingested and analyzed. The attributes of any of the above (e.g., captured audio, captured image(s) of an object(s), post(s), text content, advertisement(s), profile attribute(s), characteristic(s), etc.) may then be compared with respective attributes learned from the stored training data 820 (e.g., prestored objects). The likelihood of similarity between each of the obtained attributes (e.g., of a captured image or text) and the learned attributes is given a determined confidence score. In one example, if the confidence score exceeds a predetermined threshold, the attribute(s) is included in a media description(s) (e.g., an audio/music description, an image description) that is ultimately communicated to the user via a user interface of a computing device (e.g., UE 30, computing system 700, computing system 900). In another example, the media description(s) may include a certain number of attributes which may exceed a predetermined threshold to share with the user. The sensitivity of sharing more or less attributes may be customized based upon the needs of a particular user(s).

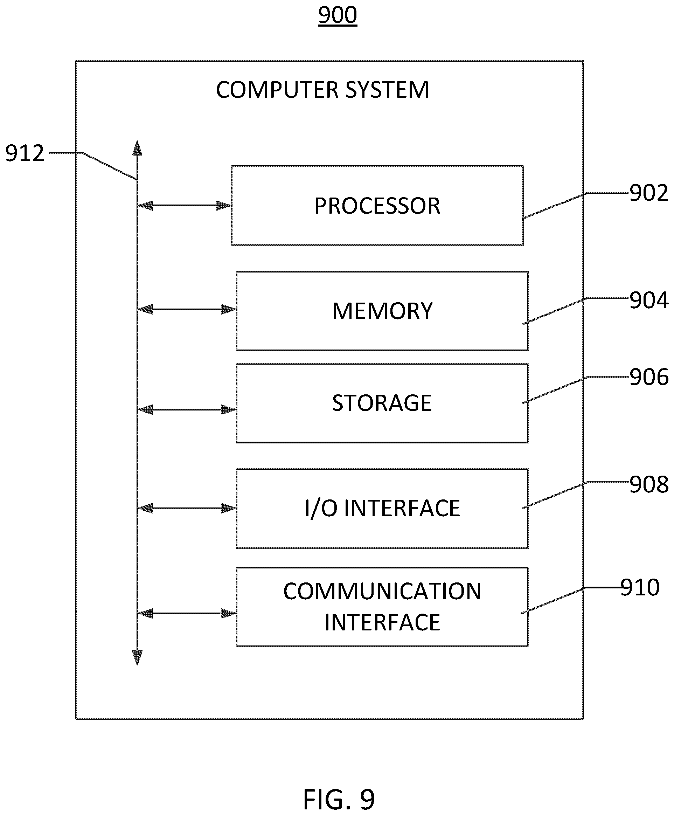

FIG. 9 illustrates an example computer system 900. In examples, one or more computer systems 900 perform one or more steps of one or more methods described or illustrated herein. In particular examples, one or more computer systems 900 provide functionality described or illustrated herein. In examples, software running on one or more computer systems 900 performs one or more steps of one or more methods described or illustrated herein or provides functionality described or illustrated herein. Examples include one or more portions of one or more computer systems 900. Herein, reference to a computer system may encompass a computing device, and vice versa, where appropriate. Moreover, reference to a computer system may encompass one or more computer systems, where appropriate.

This disclosure contemplates any suitable number of computer systems 900. This disclosure contemplates computer system 900 taking any suitable physical form. As example and not by way of limitation, computer system 900 may be an embedded computer system, a system-on-chip (SOC), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a personal digital assistant (PDA), a server, a tablet computer system, or a combination of two or more of these. Where appropriate, computer system 900 may include one or more computer systems 900; be unitary or distributed; span multiple locations; span multiple machines; span multiple data centers; or reside in a cloud, which may include one or more cloud components in one or more networks. Where appropriate, one or more computer systems 900 may perform without substantial spatial or temporal limitation one or more steps of one or more methods described or illustrated herein. As an example, and not by way of limitation, one or more computer systems 900 may perform in real time or in batch mode one or more steps of one or more methods described or illustrated herein. One or more computer systems 900 may perform at different times or at different locations one or more steps of one or more methods described or illustrated herein, where appropriate.

In examples, computer system 900 includes a processor 902, memory 904, storage 906, an input/output (I/O) interface 908, a communication interface 910, and a bus 912. Although this disclosure describes and illustrates a particular computer system having a particular number of particular components in a particular arrangement, this disclosure contemplates any suitable computer system having any suitable number of any suitable components in any suitable arrangement.

In examples, processor 902 includes hardware for executing instructions, such as those making up a computer program. As an example and not by way of limitation, to execute instructions, processor 902 may retrieve (or fetch) the instructions from an internal register, an internal cache, memory 904, or storage 906; decode and execute them; and then write one or more results to an internal register, an internal cache, memory 904, or storage 906. In particular examples, processor 902 may include one or more internal caches for data, instructions, or addresses. This disclosure contemplates processor 902 including any suitable number of any suitable internal caches, where appropriate. As an example, and not by way of limitation, processor 902 may include one or more instruction caches, one or more data caches, and one or more translation lookaside buffers (TLBs). Instructions in the instruction caches may be copies of instructions in memory 904 or storage 906, and the instruction caches may speed up retrieval of those instructions by processor 902. Data in the data caches may be copies of data in memory 904 or storage 906 for instructions executing at processor 902 to operate on; the results of previous instructions executed at processor 902 for access by subsequent instructions executing at processor 902 or for writing to memory 904 or storage 906; or other suitable data. The data caches may speed up read or write operations by processor 902. The TLBs may speed up virtual-address translation for processor 902. In particular examples, processor 902 may include one or more internal registers for data, instructions, or addresses. This disclosure contemplates processor 902 including any suitable number of any suitable internal registers, where appropriate. Where appropriate, processor 902 may include one or more arithmetic logic units (ALUs); be a multi-core processor; or include one or more processors 902. Although this disclosure describes and illustrates a particular processor, this disclosure contemplates any suitable processor.

In examples, memory 904 includes main memory for storing instructions for processor 902 to execute or data for processor 902 to operate on. As an example, and not by way of limitation, computer system 900 may load instructions from storage 906 or another source (such as, for example, another computer system 900) to memory 904. Processor 902 may then load the instructions from memory 904 to an internal register or internal cache. To execute the instructions, processor 902 may retrieve the instructions from the internal register or internal cache and decode them. During or after execution of the instructions, processor 902 may write one or more results (which may be intermediate or final results) to the internal register or internal cache. Processor 902 may then write one or more of those results to memory 904. In particular examples, processor 902 executes only instructions in one or more internal registers or internal caches or in memory 904 (as opposed to storage 906 or elsewhere) and operates only on data in one or more internal registers or internal caches or in memory 904 (as opposed to storage 906 or elsewhere). One or more memory buses (which may each include an address bus and a data bus) may couple processor 902 to memory 904. Bus 912 may include one or more memory buses, as described below. In examples, one or more memory management units (MMUs) reside between processor 902 and memory 904 and facilitate accesses to memory 904 requested by processor 902. In particular examples, memory 904 includes random access memory (RAM). This RAM may be volatile memory, where appropriate. Where appropriate, this RAM may be dynamic RAM (DRAM) or static RAM (SRAM). Moreover, where appropriate, this RAM may be single-ported or multi-ported RAM. This disclosure contemplates any suitable RAM. Memory 904 may include one or more memories 904, where appropriate. Although this disclosure describes and illustrates particular memory, this disclosure contemplates any suitable memory.

In examples, storage 906 includes mass storage for data or instructions. As an example, and not by way of limitation, storage 906 may include a hard disk drive (HDD), a floppy disk drive, flash memory, an optical disc, a magneto-optical disc, magnetic tape, or a Universal Serial Bus (USB) drive or a combination of two or more of these. Storage 906 may include removable or non-removable (or fixed) media, where appropriate. Storage 906 may be internal or external to computer system 900, where appropriate. In examples, storage 906 is non-volatile, solid-state memory. In particular examples, storage 906 includes read-only memory (ROM). Where appropriate, this ROM may be mask-programmed ROM, programmable ROM (PROM), erasable PROM (EPROM), electrically erasable PROM (EEPROM), electrically alterable ROM (EAROM), or flash memory or a combination of two or more of these. This disclosure contemplates mass storage 906 taking any suitable physical form. Storage 906 may include one or more storage control units facilitating communication between processor 902 and storage 906, where appropriate. Where appropriate, storage 906 may include one or more storages 906. Although this disclosure describes and illustrates particular storage, this disclosure contemplates any suitable storage.

In examples, I/O interface 908 includes hardware, software, or both, providing one or more interfaces for communication between computer system 900 and one or more I/O devices. Computer system 900 may include one or more of these I/O devices, where appropriate. One or more of these I/O devices may enable communication between a person and computer system 900. As an example, and not by way of limitation, an I/O device may include a keyboard, keypad, microphone, monitor, mouse, printer, scanner, speaker, still camera, stylus, tablet, touch screen, trackball, video camera, another suitable I/O device or a combination of two or more of these. An I/O device may include one or more sensors. This disclosure contemplates any suitable I/O devices and any suitable I/O interfaces 908 for them. Where appropriate, I/O interface 908 may include one or more device or software drivers enabling processor 902 to drive one or more of these I/O devices. I/O interface 908 may include one or more I/O interfaces 908, where appropriate. Although this disclosure describes and illustrates a particular I/O interface, this disclosure contemplates any suitable I/O interface.

In examples, communication interface 910 includes hardware, software, or both providing one or more interfaces for communication (such as, for example, packet-based communication) between computer system 900 and one or more other computer systems 900 or one or more networks. As an example, and not by way of limitation, communication interface 910 may include a network interface controller (NIC) or network adapter for communicating with an Ethernet or other wire-based network or a wireless NIC (WNIC) or wireless adapter for communicating with a wireless network, such as a WI-FI network. This disclosure contemplates any suitable network and any suitable communication interface 910 for it. As an example, and not by way of limitation, computer system 900 may communicate with an ad hoc network, a personal area network (PAN), a local area network (LAN), a wide area network (WAN), a metropolitan area network (MAN), or one or more portions of the Internet or a combination of two or more of these. One or more portions of one or more of these networks may be wired or wireless. As an example, computer system 900 may communicate with a wireless PAN (WPAN) (such as, for example, a BLUETOOTH WPAN), a WI-FI network, a WI-MAX network, a cellular telephone network (such as, for example, a Global System for Mobile Communications (GSM) network), or other suitable wireless network or a combination of two or more of these. Computer system 900 may include any suitable communication interface 910 for any of these networks, where appropriate. Communication interface 910 may include one or more communication interfaces 910, where appropriate. Although this disclosure describes and illustrates a particular communication interface, this disclosure contemplates any suitable communication interface.

In particular examples, bus 912 includes hardware, software, or both coupling components of computer system 900 to each other. As an example and not by way of limitation, bus 912 may include an Accelerated Graphics Port (AGP) or other graphics bus, an Enhanced Industry Standard Architecture (EISA) bus, a front-side bus (FSB), a HYPERTRANSPORT (HT) interconnect, an Industry Standard Architecture (ISA) bus, an INFINIBAND interconnect, a low-pin-count (LPC) bus, a memory bus, a Micro Channel Architecture (MCA) bus, a Peripheral Component Interconnect (PCI) bus, a PCI-Express (PCle) bus, a serial advanced technology attachment (SATA) bus, a Video Electronics Standards Association local (VLB) bus, or another suitable bus or a combination of two or more of these. Bus 912 may include one or more buses 912, where appropriate. Although this disclosure describes and illustrates a particular bus, this disclosure contemplates any suitable bus or interconnect.

Herein, a computer-readable non-transitory storage medium or media may include one or more semiconductor-based or other integrated circuits (ICs) (such, as for example, field-programmable gate arrays (FPGAs) or application-specific ICs (ASICs)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards or drives, any other suitable computer-readable non-transitory storage media, computer readable medium or any suitable combination of two or more of these, where appropriate. A computer-readable non-transitory storage medium may be volatile, non-volatile, or a combination of volatile and non-volatile, where appropriate.

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

The scope of this disclosure encompasses all changes, substitutions, variations, alterations, and modifications to the examples described or illustrated herein that a person having ordinary skill in the art would comprehend. The scope of this disclosure is not limited to the examples described or illustrated herein. Moreover, although this disclosure describes and illustrates respective examples herein as including particular components, elements, feature, functions, operations, or steps, any of these examples may include any combination or permutation of any of the components, elements, features, functions, operations, or steps described or illustrated anywhere herein that a person having ordinary skill in the art would comprehend. Furthermore, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative. Additionally, although this disclosure describes or illustrates particular examples as providing particular advantages, particular examples may provide none, some, or all of these advantages.

## Claims

1. A method comprising:
converting, by a communication device, user input to a text encoding;
generating, by a first machine learning model associated with the communication device, at least one token representing acoustic information based on the text encoding, wherein a first token of the at least one token represents at least one audio feature;
generating at least one audio vector based on the at least one token and the text encoding; and
transforming the at least one audio vector to a first audio waveform comprising at least one segment of audio content associated with the at least one audio feature.

2. **The** method of claim 1, wherein the first machine learning model comprises an autoregressive transformer decoder.

3. **The** method of claim 1 or 2, wherein the at least one audio vector is generated by a second machine learning model associated with the communication device.

4. **The** method of claim 3, further comprising: implementing, by the second machine learning model, flow matching.

5. **The** method of any preceding claim, further comprising: transforming, by a decoder, the at least one audio vector to the first audio waveform.

6. **The** method of any preceding claim, wherein the first audio waveform corresponds to a first window comprising a predetermined length associated with audio data.

7. **The** method of claim 6, further comprising generating a second audio waveform corresponding to a second window, wherein the second audio waveform is generated based on the at least one token and a portion of the first audio waveform corresponding to the first window.

8. **The** method of claim 7, further comprising: streaming, by the communication device, the first audio waveform and the second audio waveform to a second communication device.

9. **The** method of claim 7 or 8, further comprising: receiving, by the communication device, streamed music content associated with the first window and the second window.

10. **The** method of any preceding claim, wherein the user input comprises a text input comprising a textual description of the audio content.

11. A system comprising:
one or more processors; and
one or more memories communicatively coupled to the one or more processors and comprising computer-readable instructions that upon execution by the one or more processors cause the one or more processors to carry out the method of any preceding claim.

12. A computer-readable medium comprising computer-executable instructions which, when executed by a processor, cause the processor to carry out the method of any of claims 1 to 10.

13. A computer program product comprising instructions which, when executed by a computer, cause the computer to carry out the method of any of claims 1 to 10.
